# EUROPEAN PATENT APPLICATION

(11) **EP 4 717 683 A1**
(43) Date of publication of application: **01.04.2026**
(21) Application number: 24202718.3
(22) Date of filing: 25.09.2024
(51) Int. Cl.: C04B 18/167, C04B 28/02, C04B 28/04, C04B 28/14, E04C 2/06

(54) **CEMENT BOARD**

(71) Applicant: SAINT-GOBAIN PLACO, 92400 Courbevoie (FR)
(72) Inventor: NICOLEAU, Luc, 92400 Courbevoie (FR); LEFEVRE, Emeline, 92400 Courbevoie (FR)
(74) Representative: Saint-Gobain Recherche

(57) **Abstract**

The present invention relates to a method for manufacturing a cement board from a cementitious paste comprising, based on the total dry matter, from 15 to 90 wt% of a reactive binder and from 10 to 80 wt% of fillers, and from 1 to 15 wt% of particles of cementitious hydrates material having a particle size from 500 to 2500 µm. The invention also relates to cement boards obtained by such process.

## Description

The invention relates to cement board and a method for manufacturing the same.

Conventional processes for producing cement boards on an industrial scale include preparing a cementitious composition, pouring the cementitious composition into appropriate moulds having the desired shape and size, taking the boards out of the moulds once the composition is sufficiently set, and curing the boards. Cement boards can also be produced through a continuous process. During such a continuous process, a cementitious composition is prepared in continuous mixers, the composition is continuously spread on a lower sheeting carried by a conveyor to an extruder to be shaped into a ribbon. The ribbon is then carried to a cutting station to be cut into boards of desired dimensions before being cured. This continuous process results in cement boards having a sandwich structure with two external covering layers, generally embedded in a cementitious coating, separated by a cementitious core.

The continuous process can generate an important amount of scraps, which is detrimental on both financial and environmental point of view. Beyond reducing production waste, there is a continuous need for including recycled materials in construction products for contributing to the reduction the carbon footprint of the construction sector.

In this context, the present invention provides a method for manufacturing a cement board comprising:
- providing a first covering layer;
- pouring a main cementitious paste over the first covering layer;
- providing a second covering layer over the main cementitious paste;
- forming of the cement board using;
wherein the main cementitious paste comprises, based on the total dry matter, from 15 to 90 wt% of a reactive binder and from 10 to 80 wt% of fillers, and from 1 to 15 wt% of particles of cementitious hydrates material having a particle size from 500 to 2500 µm, preferably from 600 to 2400 µm, more preferably from 750 to 2000 µm.

It has been surprisingly found that the selecting a specific amount of particles of cementitious hydrates material in combination with a specific particle size could allow incorporating cementitious waste materials into cement boards while maintaining, or even improving, the mechanical properties of cement boards.

The main cementitious paste comprises, based on the total dry matter, from 15 to 90 wt% preferably 20 to 70 wt.%, more preferably 25 to 50 wt/%, of a reactive binder. The reactive binder comprises typically from 10 wt%, or from 30 wt%, or even from 50 wt%, to 95 wt%, or to 99 wt%, or even to 100 wt%, of hydraulic cement. In some embodiments, the reactive binder consists of hydraulic cement. In other embodiments, the reactive binder can comprise a mixture of hydraulic cement, calcium sulphate hemihydrate, and pozzolanic materials. In such case, the reactive binder may comprise 10 to 40 wt. % hydraulic cement, 40 to 80 wt. % calcium sulphate hemihydrate, and 2 to 35 wt. % pozzolanic material.

The hydraulic cement may be any type of cement: CEM I, II, III, IV or V, as defined in EN 197-1 :2000. Preferably, the hydraulic cement is Portland cement (CEM I). Calcium sulphate hemihydrate can refer either to alpha plaster or beta plaster. Alpha plaster has lower specific surface area compared to beta plaster, which results in lower water demand for equivalent workability. The pozzolanic material may be selected from silica fumes, fly ash, metakaolin, or mixtures thereof.

The main cementitious paste comprises, based on the total dry matter, from 10 to 80 wt%, preferably from 30 to 80 wt%, more preferably from 50 to 70 wt%, of fillers. Fillers may be selected from aggregates such as sand, limestone or other calcium carbonates, greywacke, basalt, dolomite, volcanic rock, slate, and/or recycled material from the production of the cementitious boards, or mixtures thereof, lightweight fillers such as pumicite, expanded clays, expanded perlites, expanded shale, expanded polystyrene (EPS) beads, expanded glass beads, or mixtures thereof, and fibres such as glass fibres, synthetic fibres, natural fibres, and mixtures thereof.

Such fillers are intended to be effectively inert materials. Such effectively inert materials do not tend to significantly affect the setting characteristics of the reactive binder mixture. In particular, fillers do not create any significant chemical reaction with the reactive binder mixture.

The particles of cementitious hydrates material are typically obtained by grinding cementitious waste materials, in particular cement board waste materials. Cement board waste materials can be internal waste, i.e., scraps generated by the manufacturing process, or external waste from construction or demolition sites. Preferably, the cement board waste materials are internal waste. In such case, the particles of cementitious hydrates material have essentially the same composition as the cementitious phase of the core of the cement board manufactured.

The particles of cementitious hydrates material may comprise calcium hydroxide and/or calcium silicate hydrates. Advantageously, the particles of cementitious hydrates material contain calcium hydroxide and calcium silicate hydrates in an amount of at least 5 wt%, preferably at least 10 wt%, more preferably at least 15 wt%.

Fibers are preferably separated from the waste material before or during grinding, preferably. Fibers, and more particularly glass fibers indeed tend to be difficult to grind. Typically, when the cement board has a sandwich structure, the external covering layers are separated from the core, and the particles of cementitious hydrates material are obtained by grinding the core.

The particles of cementitious hydrates material have a particle size from 500 to 2500 µm, preferably from 600 to 2400 µm, more preferably from 750 to 2000 µm. Such particle size is typically obtained by sieving the ground cementitious waste material.

The main cementitious paste comprises 1 to 15 wt%, preferably 1 to 10 wt%, more preferably 1 to 8 wt% of particles of cementitious hydrates material. When the content of particles of cementitious hydrates material exceeds 15 wt%, the mechanical properties of the cement boards may decrease. In some embodiment, the main cementitious paste may comprise more than 2 wt% or more than 3 wt% of particles of cementitious hydrates material.

Admixtures may also be added to the cementitious composition, for instance to alter or enhance the properties of this reactive binder mixture and/or to improve the workability of the cementitious composition and/or to improve the properties of the cementitious article. There are several types of admixtures, among which are retarders, set and hardening accelerators, plasticisers, foaming agents, bonding agents, shrinkage reducers, anti-foam agents, pigments, hydrophobic agent and corrosion inhibitors.

Retarders are components which can significantly delay the setting time of the reactive binder mixture. Retarders can be chosen from citric acid, tartaric acid, gluconates, phosphates, polyacrylates, polymethylacrylates, sugars and protein-based agents. On the contrary, accelerators can speed up the mechanical properties development of the reactive binder mixture. Accelerators can be chosen from soluble salts such as calcium salts, sodium salts, potassium salts, or calcium silicate hydrate (C-S-H) seeds.

Plasticisers, or superplasticisers, are used to increase the binder content without affecting the workability, or, to increase the fluidity for a same solid content. Plasticisers or superplasticisers used in the invention may be selected from lignosulphonates or synthetic naphthalene sulphonates, polycarboxylate ethers or phosphonated polyarylethers.

Other admixtures may include foaming agents, which are used to produce air bubbles in the cementitious board. Foaming agents can be made from hydrolysed proteins, synthetic surfactants and alkyl ether sulphonates combined with water and air.

The main cementitious paste is an aqueous composition. The water content is adapted to obtain the desired consistency or viscosity. The main cementitious paste comprises typically a water-to-binder weight ratio ranging from 0.2 to 1.

The first covering layer and/or second covering layer, preferably both, can be a glass fibre-based sheeting. Such fibre-based sheeting may be selected from a scrim, a mat, a fabric, or combinations thereof. A scrim is made of connected glass fibres forming a grid profile. Scrims are usually loosely woven fabrics having large mesh openings, typically from 1 to 20 mm, preferably from 2 to 10 mm.

The first covering layer and/or second covering layer, preferably both, may be embedded in a secondary cementitious slurry. Such secondary cementitious slurry typically an aqueous composition comprising hydraulic cement, fillers such as calcium carbonates, and additives, such as plasticizer. The secondary slurry helps ensuring adhesion of the covering layers to the cementitious core.

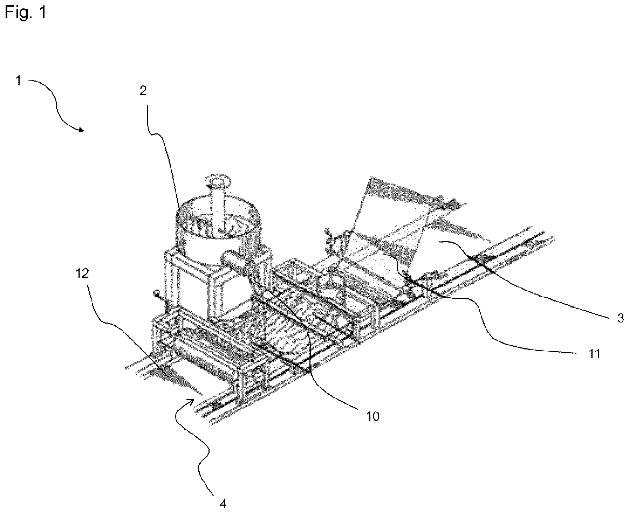

The method of the present invention is a continuous process. Fig. 1 illustrates an industrial installation 1 adapted for the method of the invention. Such installation comprises at least a tank 2, in which components are continuously mixed for preparing the main cementitious paste 10. A first covering layer 11 is unwound on a conveyor 3. The main cementitious paste 10 is poured on the first covering layer 11. This first covering layer 11 is thus covered with the cementitious paste 10, the latter forming the core of the cement boards 4. In some embodiments, the conveyor 3 comprises vibrating components which help spread out the cementitious paste 10 with its vibrations. The installation can also comprise a compaction roll (not shown) for compacting the main cementitious paste 10. A second covering layer 12 is then disposed on the main cementitious paste 10 to form the sandwich structure of the cement boards 4. The first and second covering layers 11, 12 can be coated with a secondary cementitious slurry before being disposed on the conveyor 3 or the main cementitious paste 10. The secondary cementitious slurry is typically applied by dipping the first or second covering layer 11 in the second cementitious slurry. The cement boards 4 are then formed, typically through an extruder, and cut to the desired dimensions in a cutting station. The cement boards 4 can then be stored for curing.

The present invention also relates to a cement board obtained by the method of the present invention. The cement board comprises a core between a first covering layer and a second covering layer, wherein the core results from the curing of an aqueous cementitious composition comprising, based on the total dry matter, 15 to 90 wt% of a reactive binder, from 10 to 80 wt% of fillers, and from 2 to 10 wt% of particles of cementitious hydrates material having a particle size from 500 to 2500 µm.

The invention will be illustrated by the following non-limiting example.

Cement boards comprising a core between two covering layers were prepared. The core is obtained from a main cementitious paste. The covering layers are fiberglass mesh embedded in a secondary slurry comprising Portland cement, calcium carbonate and a plasticizer. For the Reference cement boards, the main cementitious paste is made of 19.6 vol% Portland cement and 41 vol% pumicite, 7.1 vol% calcium carbonate, and 36.9 vol% water. For the cement boards of examples 1 to 4, the main cementitious paste has a composition similar to the Reference cement board except that part of the pumicite is substituted with particles of cementitious hydrates material so that the content of particles of cementitious hydrates material is 5 wt% based on dry weight. The particles of cementitious hydrates material were obtained by crushing scraps from the manufacture of Reference cement boards. The cementitious particles were separated by sieving into different fractions of particle size: F1 =149-297 µm F2 = 297-595 µm, F3 = 595-1190 µm, F4 = 1190-2380 %m, F5 = >2380 µm. Example 1 to 4 were prepared with a main cementitious paste comprising particles of cementitious hydrates material having particle size corresponding fractions F1 to F5 respectively.

Mechanical properties, in particular flexural strength, of the cement boards of examples 1 to 4 have been measured and compared to the Reference cement boards, i.e. cement boards obtained from a main cementitious paste without particles of cementitious hydrates material. The flexural strength is measured after curing during 14 days by 4 points bending method. The results are summarized in table 1. Symbols ⊖ and ⊕ mean that the cement boards have as flexural strength lower, respectively similar or higher, compared to the Reference cement boards.

**Table 1**

| | Ex 1 | Ex 2 | Ex 3 | Ex 4 | Ex 5 |
|---|---|---|---|---|---|
| Cementitious particle size fraction | F1 | F2 | F3 | F4 | F5 |
| Flexural strength after 14 days | ⊖ | ⊖ | ⊕ | ⊕ | ⊖ |

Similar tests have been performed on lightweight cement boards comprising EPS beads. For the Reference lightweight cement boards, the main cementitious paste is made of 11.7 vol% Portland cement, 40.1 vol% pumicite and 35.1 vol% EPS beads, based on dry weight, and 13 vol% water. For the cement boards of examples 6 to 10, the main cementitious paste has a composition similar to the Reference cement board except that part of the pumicite is substituted with particles of cementitious hydrates material so that the content of particles of cementitious hydrates material is 5 wt% based on dry weight. The particles of cementitious hydrates material were obtained by crushing scraps from the manufacture of Reference lightweight cement boards. The particles of cementitious hydrates material were separated by sieving into different fractions of particle size: F1 =149-297 µm F2 = 297-595 µm, F3 = 595-1190 µm, F4 = 1190-2380 %m, F5 = >2380 µm. Example 6 to 10 were prepared with a main cementitious paste comprising particles of cementitious hydrates material having particle size corresponding fractions F1 to F5 respectively.

**Table 2**

| | Ex 6 | Ex 7 | Ex 8 | Ex 9 | Ex 10 |
|---|---|---|---|---|---|
| Cementitious particle size fraction | F1 | F2 | F3 | F4 | F5 |
| Flexural strength after 14 days | ⊖ | ⊖ | ⊕ | ⊕ | ⊖ |

As can be seen from tables 1 and 2, the cement boards obtained with particles of cementitious hydrates material having a size fraction from 595 to 2380 µm (ex 3, 4, 8 and 9) show similar or improved mechanical properties compared to the Reference cement boards.

## Claims

1. Method for manufacturing a cement board comprising:
- providing a first covering layer;
- pouring a main cementitious paste over the first covering layer;
- providing a second covering layer over the main cementitious paste;
- forming of the cement board;
wherein the main cementitious paste comprises, based on the total dry matter, from 15 to 90 wt% of a reactive binder and from 10 to 80 wt% of fillers, and from 1 to 15 wt% of particles of cementitious hydrates material having a particle size from 500 to 2500 µm.

2. The method according to claim 1, wherein the particles of cementitious hydrates material have a particle size from 600 to 2400 µm, preferably from 750 to 2000 µm.

3. The method according to claim 2, wherein the particles of cementitious hydrates material are obtained by grinding cementitious waste materials, in particular cement board waste materials.

4. The method according to claim 2, wherein the covering layers are separated from the cement board waste materials, preferably before grinding.

5. The method according to claim 3 or 4, wherein the particles of cementitious hydrates material are obtained by sieving the ground cementitious waste materials.

6. The method according to any one of claims 1 to 5, wherein the particles of cementitious hydrates material comprise calcium hydroxide and/or calcium silicate hydrates.

7. The method according to any one of claims 1 to 6, wherein the particles of cementitious hydrates material contain calcium hydroxide and calcium silicate hydrates in an amount of at least 5 wt%, preferably at least 10 wt%, more preferably at least 15 wt%.

8. The method according to any one of claims 1 to 7, wherein the reactive binder comprises 10 to 100 wt% of hydraulic cement.

9. The method according to any one of claims 1 to 8, wherein the fillers are selected from aggregates, lightweight fillers, fibres, or mixtures thereof.

10. The method according to claim 9, wherein the aggregates are selected from sand, limestone or other calcium carbonates, greywacke, basalt, dolomite, volcanic rock, slate, or mixtures thereof.

11. The method according to claim 9 or 10, wherein the lightweight fillers are selected from pumicite, expanded clays, expanded perlites, expanded shale, expanded polystyrene beads, expanded glass beads, or mixtures thereof.

12. The method according to any one of claims 9 to 11, wherein the fibres are selected from glass fibres, synthetic fibres, natural fibres, or mixtures thereof.

13. The method according to any one of claims 1 to 12, wherein the first covering layer and/or second covering layer is a glass fibre-based sheeting selected from a scrim, a mat, a fabric, or combinations thereof.

14. The method according to any one of claims 1 to 13, wherein the first covering layer and/or second covering layer is embedded in a cementitious slurry.

15. A cement board obtained by the process of any one of claims 1 to 14 comprising a core between a first covering layer and a second covering layer, wherein the core results from the curing of an aqueous cementitious composition comprising, based on the total dry matter, 15 to 90 wt% of a reactive binder, from 10 to 80 wt% of fillers, and from 2 to 10 wt% of particles of cementitious hydrates material having a particle size from 500 to 2500 µm.
